# EUROPÄISCHE PATENTSCHRIFT

(11) **EP 2 561 119 B1**
(45) Veröffentlichungstag und Bekanntmachung des Hinweises auf die Patenterteilung: **23.04.2014**
(21) Anmeldenummer: 11718235.2
(22) Anmeldetag: 18.04.2011
(51) Int. Cl.: C23G 1/36, C01B 21/42, C01B 13/18, C01B 7/19

(54) **VERFAHREN ZUR GEWINNUNG BZW. RÜCKGEWINNUNG VON SALPETERSÄURE UND FLUSSSÄURE AUS LÖSUNGEN VON EDELSTAHLBEIZANLAGEN**
METHOD FOR OBTAINING OR RECOVERING NITRIC ACID AND HYDROFLUORIC ACID FROM SOLUTIONS OF STAINLESS STEEL PICKLING SYSTEMS
PROCÉDÉ POUR LA PRODUCTION OU LA RÉCUPÉRATION D'ACIDE NITRIQUE ET D'ACIDE FLUORHYDRIQUE DE SOLUTIONS D'INSTALLATIONS DE DÉCAPAGE D'ACIER INOXYDABLE

(30) Priorität: 20.04.2010 AT 6402010
(43) Veröffentlichungstag der Anmeldung: 27.02.2013
(73) Patentinhaber: Key Technologies Industriebau GmbH, 3400 Klosterneuburg (AT)
(72) Erfinder: FRITHUM, Gerhard, A-2514 Traiskirchen (AT); KLAUSNER, Herbert, A-3001 Mauerbach (AT); SZOKOL, Wilfried, A-2340 Mödling (AT); STOREK, Fabian, A-1030 Wien (AT)
(74) Vertreter: Schober, Elisabeth
(86) Internationale Anmeldenummer: PCT/AT2011/000188
(87) Internationale Veröffentlichungsnummer: WO 2011/130760

(56) Entgegenhaltungen:
- EP-A1- 1 038 991
- WO-A1-96/27554

## Beschreibung

Die vorliegende Erfindung betrifft ein Verfahren zur Gewinnung bzw. Rückgewinnung von Säuren aus Lösungen und/oder aus Metallsalze dieser Säuren, vorzugsweise Fluoride und gegebenenfalls Nitrate von Fe, Cr, Ni, enthaltenden Lösungen aus Edelstahlbeizanlagen.

Verfahren zur Rückgewinnung von Säuren, insbesondere aus Salpeter- und Flusssäure-Lösungen, bzw. aus Metall-haltigen Salpeter- und Flusssäurelösungen aus der Stahlbearbeitung sind im Stand der Technik bekannt. Eine Übersicht der Verfahren wird in EP 0 296 147 gegeben.

So können Kristallisationsverfahren, wie in OE 335 251 oder auch EP 0 984 078 beschriebenen, verwendet werden. Dabei werden die Metall-haltigen Säurelösungen eingedampft und die Säuren auf diese Weise abdestilliert, wobei bei Überschreiten der Sättigungsgrenze die Metallsalze, vorwiegend Fluoride, im Destillationssumpf auskristallisieren. Diese werden abgetrennt und die Mutterlauge wird mit den abdestillierten Säuren vereinigt und wieder in den Kreislauf zurückgeführt. Damit verbleibt aber ein Gehalt an Metallsalzen in der regenerierten Beizlösung, der sich im Zuge der Verwendung weiter erhöht, bis die Grenzlöslichkeit erreicht wird. Dadurch wird die Beizschlammbildung deutlich erhöht und der Einfluss solcher Lösungen auf das Beizverhalten ist ungeklärt. Die bei der Regeneration abgetrennten Metallsalzkristalle lassen sich auf diese Weise nicht in trockenem, rieselfähigem Zustand gewinnen, sie sind "nass", da sie noch Anteile an in Wasser gelösten Metallsalzen (Mutterlauge), sowie mehr oder weniger hohe Säuregehalte aufweisen, die nur durch aufwendige Waschvorgänge entfernt werden können.

Ein Aufarbeiten der Kristalle ist daher problematisch und erfordert besondere korrosionsfeste Anlagen zu ihrer Förderung und Weiterverarbeitung, da die enthaltenen bzw. anhaftenden Anteile von in Wasser gelösten Metallsalzen als Elektrolyt wirken, was bekanntermaßen für die Korrosion der Anlagenteile verantwortlich ist. Zudem zeichnen sich diese "nassen" Kristalle durch eine allgemein schlechte Förderbarkeit aus.

Es sind auch pyrohydrolytische Verfahren aus dem Stand der Technik bekannt, wie sie beispielsweise in AT 412 001, EP 0296 147 oder EP 1 038 991 beschrieben sind. Dabei werden die Metall-haltigen Säurelösungen als solche oder in bereits aufkonzentrierter Form, nachdem bereits ein Teil der Säuren abgedampft wurde, wie beispielsweise in AT 412 001 oder EP 1 038 991 beschrieben, im Wesentlichen bei Temperaturen von 450 bis 900 °C in ein- oder mehrzonigen Sprühröstreaktoren behandelt. Der Nachteil dieser Verfahren ist, dass durch diese Art der thermischen Behandlung ein Großteil der verbleibenden Salpetersäure zu NO und NO₂ zersetzt wird. Daher ist bei diesen Verfahren die Rückgewinnungsrate von Salpetersäure mit ca. 60 % begrenzt, wenn nicht zusätzliche Maßnahmen, beispielsweise ein zusätzlicher Oxidationsschritt, wie in EP 0296 147 beschrieben, getroffen werden. Dabei wird Wasserstoffperoxid für die oxidative Behandlung der NO_{X} benötigt, welche in einem zusätzlichen erforderlichen Oxidationsturm erfolgt, um die Ausbeute an zurückgewonnener Salpetersäure zu erhöhen.

Ziel der vorliegenden Erfindung ist es, ein alternatives Verfahren zur Gewinnung bzw. Rückgewinnung von Säuren, insbesondere Salpeter- und Flusssäure, aus Lösungen und/oder aus Metallsalze, vorzugsweise Fe-, Cr-, Ni-Salze, dieser Säuren enthaltenden Lösungen aus Edelstahlbeizanlagen bereitzustellen, bei welchem Salpetersäure und Wasser bereits vor einem gegebenenfalls nachfolgenden Röst- oder Pyrohydrolyseschritt ohne Zersetzung der Salpetersäure schonend abgetrennt und trockene, rieselfähige Metallsalze in kristalliner Form erzeugt werden.

Dadurch wird gegenüber den im Stand der Technik bekannten Verfahren
1) die Rückgewinnungsrate der Salpetersäure von ca. 50% auf über 95% erhöht, ohne dass zusätzliche Maßnahmen zur Erzeugung von Salpetersäure aus gebildeten NO_{X} erforderlich sind; .
2) die Bildung von NO_{X} im Abgas somit praktisch verhindert, wodurch ein wesentlich geringer Investitions-, Kosten- und Betriebsmitteleinsatz entsteht, da kein aufwendiges Verfahren zum Entfernen der NO_{X} aus dem Abgas zB mittels Denox-Verfahren erforderlich ist;
3) die Gewinnung von trockenen und rieselfähigen Metallfluoriden ermöglicht, weshalb die nachfolgenden Verfahrensschritte einfach und kostengünstig ausgeführt werden können, insbesondere da aufgrund der Abwesenheit eines (flüssigen) Elektrolyten kaum Maßnahmen gegen Korrosion erforderlich sind;
4) keine Metall-haltige Mutterlauge erhalten, die in der Folge eigens behandelt werden muss, oder beim Zumischen zur regenerierten Säurelösung eine Beizlösung zur Folge hat, in der bereits ein "Mindest"-Metallgehalt enthalten ist;
5) keine Zugabe von Förderzusätzen bei der Röstung der trockenen Metallsalze erforderlich,
6) eine Oxidzugabe zu den Fluoriden überflüssig, was einerseits zu einer erheblichen Energieeinsparung im Röstprozess und andererseits zu einer erheblich kleineren spezifischen Anlagengröße führt.

Diese Ziele werden durch das erfindungsgemäße Verfahren zur Gewinnung bzw. Rückgewinnung von Säuren, insbesondere von Salpetersäure und Flusssäure, aus Lösungen und/oder aus Metallsalze dieser Säuren enthaltenden Lösungen erreicht, umfassend die Schritte
a) Sprühtrocknen der Lösungen bei Temperaturen unterhalb der Zersetzungstemperatur der Säuren, wobei die dafür erforderliche Energie über einen gasförmigen Wärmeträger eingebracht wird und der gasförmige Wärmeträger Luft ist, um trockene Metallsalze und gasförmige Säuren zu erhalten;
b) Absorbieren der im Schritt a) gebildeten gasförmigen Säuren;
c) Abtrennen der in Schritt a) gebildeten trockenen Metallsalze;
   gegebenenfalls
d) Rösten der in Schritt a) erhaltenen trockenen Metallsalze bei Temperaturen im Bereich von 400-900 °C, um Metalloxide und gasförmige Säuren zu erhalten;
e) Absorbieren der in Schritt d) gebildeten gasförmigen Säuren.

In einer vorteilhaften Ausführungsform der Erfindung liegt die Temperatur des gasförmigen Wärmeträgers im Verfahrensschritt a) im Bereich von 180 bis 500 °C, bevorzugt von 300 bis 400 °C, und stärker bevorzugt bei etwa 350 °C. Hierdurch wird während der Sprühtrocknung die Zersetzungstemperatur von Salpetersäure, die bei etwa 160 °C anfängt sich zu zersetzen, nicht überschritten, was zur Folge hat, dass keine NO_{X} gebildet werden.

Die aus der Sprühtrocknung austretenden Metallsalze, hauptsächlich Fluoride der entsprechenden Metalle, sind trocken und rieselfähig.

In einer weiteren vorteilhaften Ausführungsform der Erfindung liegt die Temperatur im Röstschritt d), bei welchem die im Sprühtrocknungsverfahren gewonnenen trockenen Metallsalze, hauptsächlich Fluoride, pyrohydrolytisch, beispielsweise in einem Drehrohrofen unter Zuführung von Wasserdampf, zum Metalloxid umgesetzt werden, im Bereich von 500 bis 800 °C, bevorzugt von 650 bis 750 °C und stärker bevorzugt bei etwa 700 °C. Die Produkte aus dem Röstprozess sind die entsprechenden Metalloxide und gasförmige Säure, hauptsächlich Flusssäure, die im darauffolgenden Schritt absorbiert wird.

In noch einer weiteren vorteilhaften Ausführungsform der Erfindung erfolgt das Absorbieren der in den Verfahrensschritten b) oder e) erhaltenen gasförmigen Säuren, d.h. der Salpetersäure und der Flusssäure, in Wasser. Die so regenerierten Säuren werden ausschließlich aus der Dampfphase wiedergewonnen, indem die gasförmigen Säuren in einer oder mehreren Absorptionsstufen nach dem Sprühtrockner bzw. Röstreaktor in Lösung gebracht werden. Gleichzeitig kann der Säuregehalt durch Ausschleusung von Wasserdampf erhöht werden.

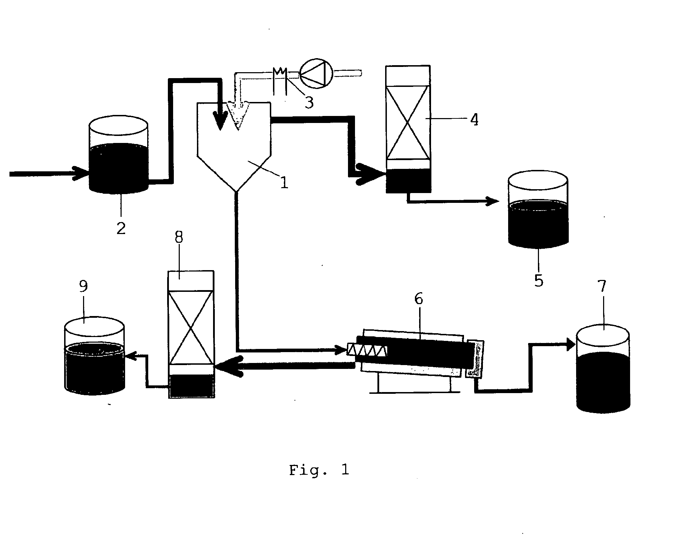

Zum besseren Verständnis der Erfindung wird diese in der Folge anhand der Figur 1 erläutert.

Figur 1 zeigt eine schematische Anlage zur Durchführung des erfindungsgemäßen Verfahrens.

Die Regenerationsanlage besteht aus einem Sprühtrockner 1, der aus einem Mischsäure-Tank 2 gespeist wird. Im Sprühtrockner wird vorgewärmte Luft 3 eingebracht (180°C bis 500°C), bevorzugt Luft von ca. 350°C, die Mischsäure wird mittels Ein- oder Zweistoffdüse(n) (nicht dargestellt) in den Sprühtrockner 1 verdüst. Das mit ca. 140 °C austretende Abgas aus dem Sprühtrockner besteht hauptsächlich aus Salpetersäure, die nach einer Quenche in einer nachfolgenden Absorptionskolonne 4 mittels Spülwasser aus dem Beizprozess (nicht dargestellt) ausgewaschen wird. Die so erhaltene Salpetersäure wird von der Absorptionskolonne 4 in einen Tank 5 gepumpt, um im Beizprozess wiederverwendet zu werden.

Am Boden des Sprühtrockners 1 werden die trockenen und rieselfähigen Metallsalze, hauptsächlich Fluoride, ausgetragen und in einen nachfolgenden Röstreaktor 6 eingebracht. Dafür wird, wie dargestellt, beispielsweise ein indirekt beheiztes Drehrohr verwendet, wobei in den Röstraum ein Gemisch aus Dampf und Luft in für die Röstreaktion entsprechender Zusammensetzung eingebracht wird und bei ca. 700°C geröstet wird (Pyrohydrolyse).

Das dabei entstehende Metalloxid wird zu einem Oxidbehälter 7 befördert.

Die dabei entstehende gasförmige Säure besteht hauptsächlich aus Flusssäure (HF) und wird in eine weitere Absorbtionskolonne 8 eingeleitet und von dort als wässrige Lösung in einen Tank 9 gepumpt, um im Beizprozess wieder eingesetzt zu werden.

Über den Kopf der Absorptionskolonnen 4, 8 werden Wasserdampf und gegebenenfalls Spuren von NO_{X} und HF ausgeschleust, welche erforderlichenfalls in bekannter Weise behandelt und unter Einhaltung der entsprechenden Umweltvorschriften in die Umgebung abgegeben werden können.

## Patentansprüche

1. Verfahren zur Gewinnung bzw. Rückgewinnung von Säuren, insbesondere Salpetersäure und Flusssäure, aus Lösungen und/oder aus Metallsalze dieser Säuren enthaltenden Lösungen, umfassend die Schritte
a) Sprühtrocknen der Lösungen bei Temperaturen unterhalb der Zersetzungstemperatur der Säuren, wobei die dafür erforderliche Energie über einen gasförmigen Wärmeträger eingebracht wird und der gasförmige Wärmeträger Luft ist, um trockene Metallsalze und gasförmige Säuren zu erhalten;
b) Absorbieren der im Schritt a) gebildeten gasförmigen Säuren;
c) Abtrennen der in Schritt a) gebildeten trockenen Metallsalze;
gegebenenfalls
d) Rösten der in Schritt a) erhaltenen trockenen Metallsalze bei Temperaturen im Bereich von 400-900 °C, um Metalloxide und gasförmige Säuren zu erhalten;
e) Absorbieren der in Schritt d) gebildeten gasförmigen Säuren.

2. Verfahren nach Anspruch 1, **dadurch gekennzeichnet, dass** die Temperatur des gasförmigen Wärmeträgers im Verfahrensschritt a) im Bereich von 180 bis 500 °C, bevorzugt von 300 bis 400 °C liegt.

3. Verfahren nach einem der Ansprüche 1 oder 2, **dadurch gekennzeichnet, dass** die Temperatur im Verfahrensschritt d) im Bereich von 500 bis 800 °C, bevorzugt von 650 bis 750 °C liegt.

4. Verfahren nach einem der Ansprüche 1 bis 3, **dadurch gekennzeichnet, dass** das Absorbieren der in den Verfahrensschritten b) oder e) erhaltenen gasförmigen Säuren in Wasser erfolgt.

## Claims

1. A method for obtaining or recovering acids, in particular nitric acid and hydrofluoric acid, from solutions containing solutions and/or metal salts of these acids, including the steps of
a) spray-drying the solutions at temperatures below the decomposition temperature of the acids, the requisite energy for which is introduced via a gaseous heat-transfer medium, and wherein the gaseous heat-transfer medium is air, in order to obtain dry metal salts and gaseous acids;
b) absorbing the gaseous acids formed in step a);
c) separating out the dry metal salts formed in step a);
optionally
d) roasting the dry metal salts obtained in step a) at temperatures in the range from 400 to 900°C, in order to obtain metal oxides and gaseous acids;
e) absorbing the gaseous acids formed in step d).

2. The method according to claim 1, **characterized in that** the temperature of the gaseous heat-transfer medium in method step a) is in the range from 180 to 500°C, preferably from 300 to 400°C.

3. The method according to one of claims 1 or 2, **characterized in that** the temperature in method step d) is in the range from 500 to 800°C, preferably from 650 to 750°C.

4. The method according to one of claims 1 to 3, **characterized in that** the absorbing of the gaseous acids obtained in method steps b) or e) takes place in water.

## Revendications

1. Procédé d'obtention ou respectivement de récupération d'acides, en particulier d'acide nitrique et d'acide fluorhydrique, à partir de solutions et/ou de solutions contenant des sels métalliques de ces acides, comprenant les étapes suivantes :
a) séchage par vaporisation des solutions à des températures inférieures à la température de décomposition des acides, l'énergie nécessaire à cet effet étant apportée par le biais d'un caloporteur gazeux, et le caloporteur gazeux étant de l'air, pour obtenir des sels métalliques secs et des acides gazeux ;
b) absorption des acides gazeux formés dans l'étape a) ;
c) séparation des sels métalliques secs formés dans l'étape a) ;
éventuellement
d) grillage des sels métalliques secs obtenus dans l'étape a) à des températures dans la plage de 400-900 °C afin d'obtenir des oxydes métalliques et des acides gazeux ;
e) absorption des acides gazeux obtenus dans l'étape d).

2. Procédé selon la revendication 1, **caractérisé en ce que** la température du caloporteur gazeux dans l'étape de procédé a) se situe dans la plage de 180 à 500°C, de préférence de 300 à 400 °C.

3. Procédé selon une des revendications 1 ou 2, **caractérisé en ce que** la température dans l'étape de procédé d) se situe dans la plage de 500 à 800°C, de préférence de 650 à 750 °C.

4. Procédé selon une des revendications 1 à 3, **caractérisé en ce que** l'absorption des acides gazeux obtenus dans les étapes de procédé b) ou e) s'effectue dans de l'eau.
